# EUROPEAN PATENT APPLICATION

(11) **EP 0 984 395 A2**
(43) Date of publication of application: **08.03.2000**
(21) Application number: 99306823.8
(22) Date of filing: 27.08.1999
(51) Int. Cl.: G06T 11/60

(54) **Program storage medium**

(30) Priority: 31.08.1998 JP 28470898
(71) Applicant: ALPS ELECTRIC CO., LTD., Ota-ku Tokyo 145 (JP); Fuji Photo Film Co., Ltd., Kanagawa-ken (JP)
(72) Inventor: Aratsu, Shuichi, Iwate-gun, Iwate-ken (JP); Hakkaku, Kunio, Kanagawa-ken (JP)
(74) Representative: Kensett, John Hinton

(57) **Abstract**

A program storage means stores a program for laying out operation targets such as an image, a character, and a figure on a document and for printing the document. The program uses a low-resolution image read by an image reading unit when the operation targets are laid out on the document; and specifies the reading resolution most appropriate for printing according to original-image information obtained when the low-resolution image is read and printing-size information when printing, and reads the image again by the image reading unit at the specified reading resolution and prints it.

## Description

The present invention relates to program storage media, and more particularly, to a program storage medium suited to layout an image read by an image reading unit such as an image scanner, together with a character and a figure on a document and to print out the document.

Storage media which store a program have been conventionally proposed, the program being used for laying out operation targets (also called objects) on one document, such as a bitmap-data image stored in a file system, such as a hard-disk drive or a CD-ROM drive, or read by an image reading unit, such as an image scanner and a digital camera, a character formed of character information input by a keyboard and modification information, such as a character size and a font, and an image formed of coordinate information input by a pointing device, such as a mouse or a track ball, and modification information; for manipulating and editing the attribute information of each object; and for printing the manipulated and edited document by a printing unit. In such a program storage medium, information related to all operation targets is stored in the document.

Such a conventional program storage medium is connected to a control section of a personal computer or another unit and a predetermined program is executed. The personal computer is connected to an image scanner and a printer to form a hardware system for executing a series of operations from image reading to printing.

When the program stored in the program storage medium is executed in the hardware system to read an original image 22 shown in Fig. 9 by the image scanner, two types of bitmap-data image information are generated, one is a preview image 23 shown in Fig. 10 used for checking the position of the original on the image scanner and the other is an image 24 for layout and printing shown in Fig. 11 used for actual layout on a document and printing.

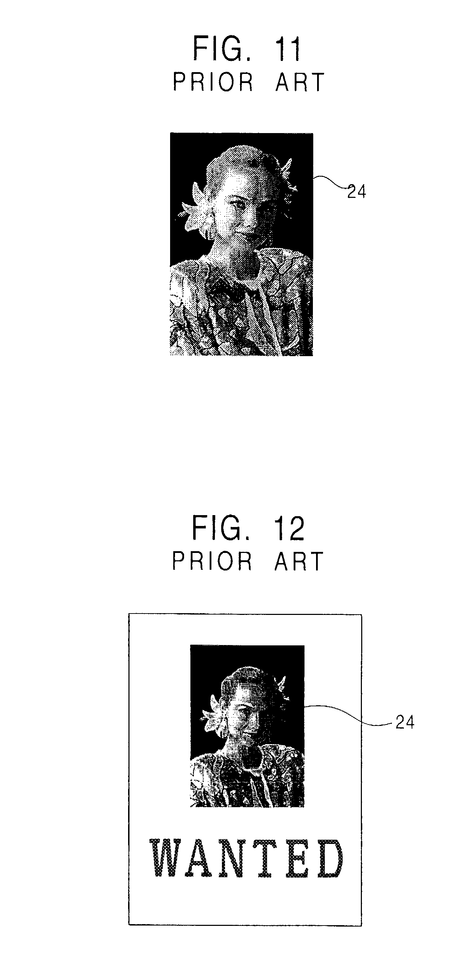

And then, as shown in Fig. 12, the image 24 for layout and printing is used for layout on a document together with characters. Since the preview image becomes unnecessary when the reading operation is finished, it is deleted.

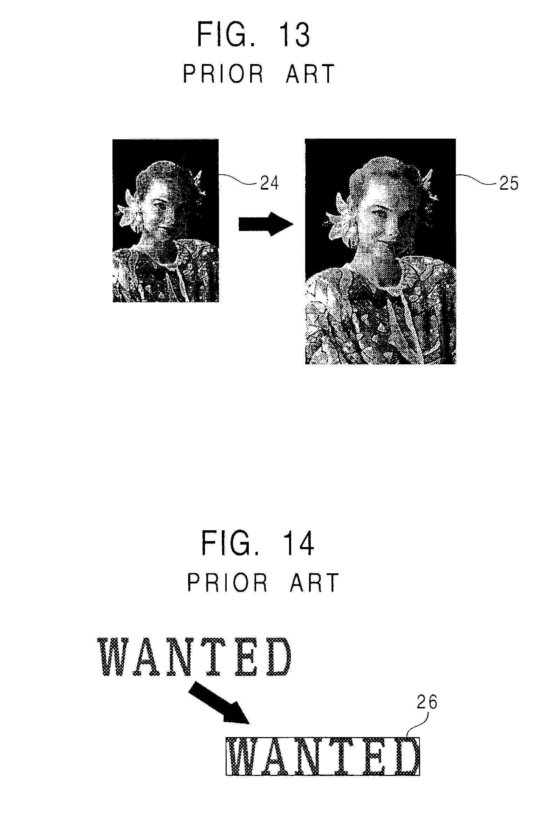

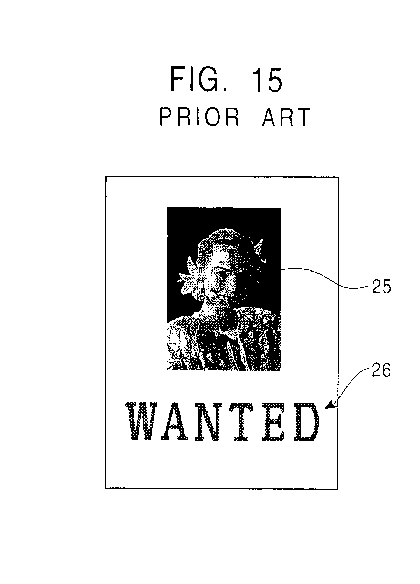

To print the document, re-sizing processing, such as interpolation and thinning out, is applied to the image 24 for layout and printing to suit it to a predetermined printing size, as shown in Fig. 13, and an image 25 for printing is formed. As for a character and a figure in general, only for characters in this case, bitmap-image characters 26 for printing, having a resolution required for printing, are generated according to the outline data of the laid-out characters. With the use of the bitmap images of the re-sized image and the generated characters, the image 25 for printing and the characters 26 for printing are combined in the desired manner as shown in Fig. 15.

Since the information of the image 24 for layout and printing, necessary for layout and printing on the document, is stored in the document in the conventional program storage medium to this end, layout and printing are performed according to this information and the image scanner is not required after the image is read once.

In the conventional program storage medium, however, since information related to a character and a figure among operation targets stored in a document by the program includes shape-definition information and attribute information such as a color and filling-in, a small information storage capacity is required. Conversely, since information related to a bitmap-data image is obtained in units of pixels, a very larger information storage capacity is required than that for the character and the figure.

In addition, in the information related to the character and the figure, since the shape-definition information is changed according to a change rate of a printing size when the size is changed on the document or in printing, the amount of the information which has to be stored in the document does not change.

On the other hand, when a printing size becomes large, the size of the bitmap-data image needs to be adjusted by interpolation, the resolution of the bitmap-data image is reduced and the image quality deteriorates. To prevent such image-quality deterioration, the size of the bitmap images for document printing needs to be determined in advance so as to match the printing size. When the image is read at a large size corresponding to the printing size, the large-sized image needs to be handled even in layout work on a computer screen, which is irrelevant to the printing size, updating the screen and the layout work take very long periods of time. To perform the layout work quickly in this case, a larger-capacity memory and a higher-speed CPU are required.

Accordingly, it is an object of the present invention to provide a program storage medium which allows layout work to be performed quickly and efficiently with a reduced amount of information of a bitmap-data image to be held in a document and which enables a high-quality image to be obtained by changing the reading resolution of an image reading unit to the most appropriate one according to a printing size even if the printing size is changed in printing.

The foregoing object is achieved according to the present invention through the provision of a program storage medium for storing a program used for laying out operation targets such as an image, a character, and a figure on a document and for printing the document, wherein the program uses a low-resolution image read by image reading means when the operation targets are laid out on the document; and specifies the reading resolution most appropriate for printing according to original-image information obtained when the low-resolution image is read and printing-size information when printing, and reads the image again by the image reading means at the specified reading resolution and prints it. With such a configuration being employed, since the amount of image information required for layout of the operation targets on the document is reduced, the layout work is performed quickly and efficiently, and the file size of the document is small. In addition, since the image resolution is set to the most appropriate one when printing, printing image quality is improved. Furthermore, since a reading operation performed by the image reading means and a printing operation can be performed simultaneously, a buffer size required for storing image information used for printing, read by the image reading means, is made small.

A preview image for specifying a reading area to be read by the image reading means may serve as the low-resolution image. With such a configuration being employed, since an image read for a preview can be used as is for layout work on a document, the number of times a low-resolution image is read is reduced and the layout work is performed efficiently and promptly.

The invention further relates to a computer program and to a method for laying out targets on and printing a document.

### BRIEF DESCRIPTION OF THE DRAWINGS

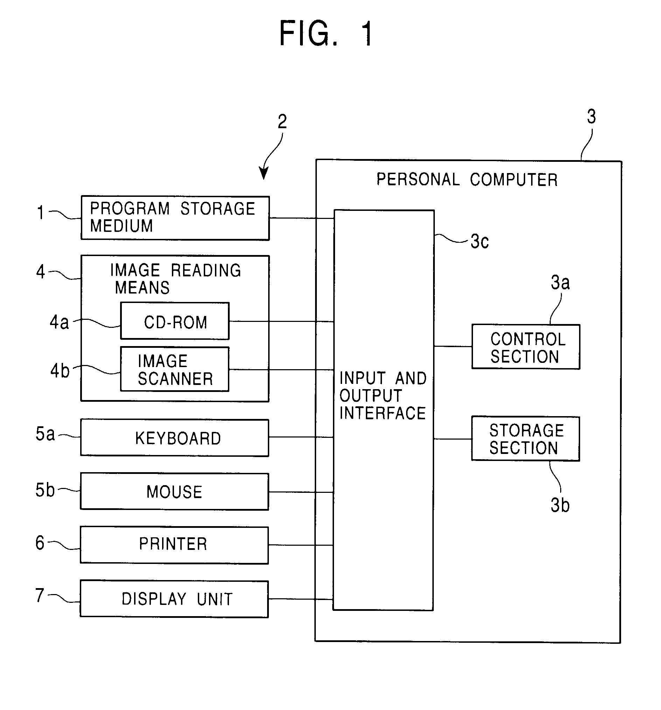

Fig. 1 is a block diagram of a hardware system in which a program storage medium according to an embodiment of the present invention is built.

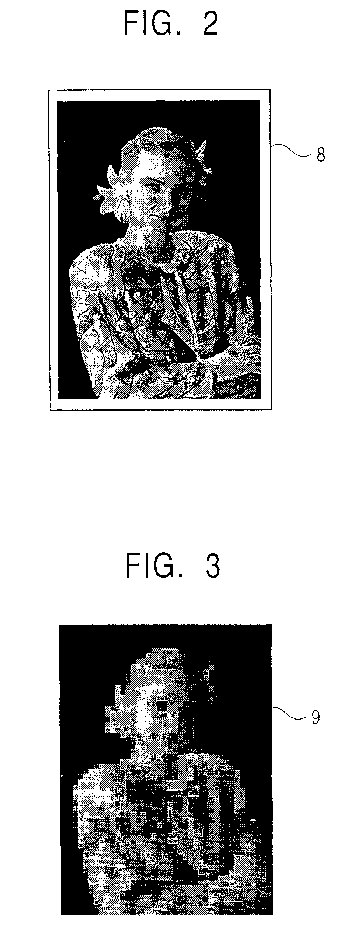

Fig. 2 is a view showing the original image to be read by an image scanner shown in Fig. 1.

Fig. 3 is a view showing a preview image in the present embodiment.

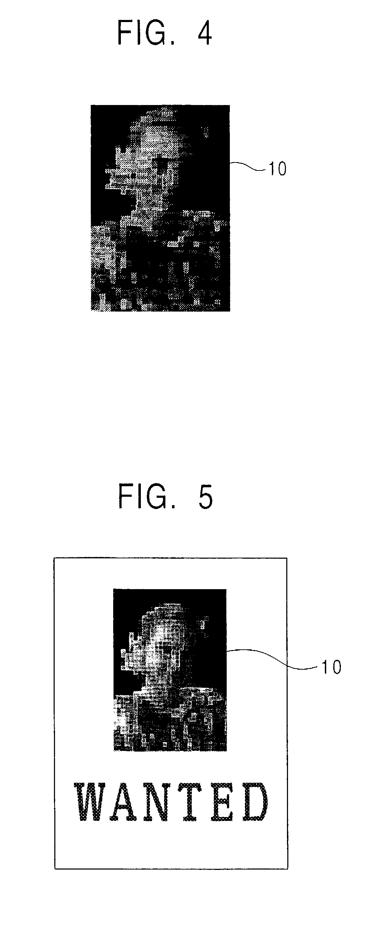

Fig. 4 is a view showing a layout image cut from the preview image in the present embodiment.

Fig. 5 is a view showing a layout condition in which the layout image and layout characters are laid out in the present embodiment.

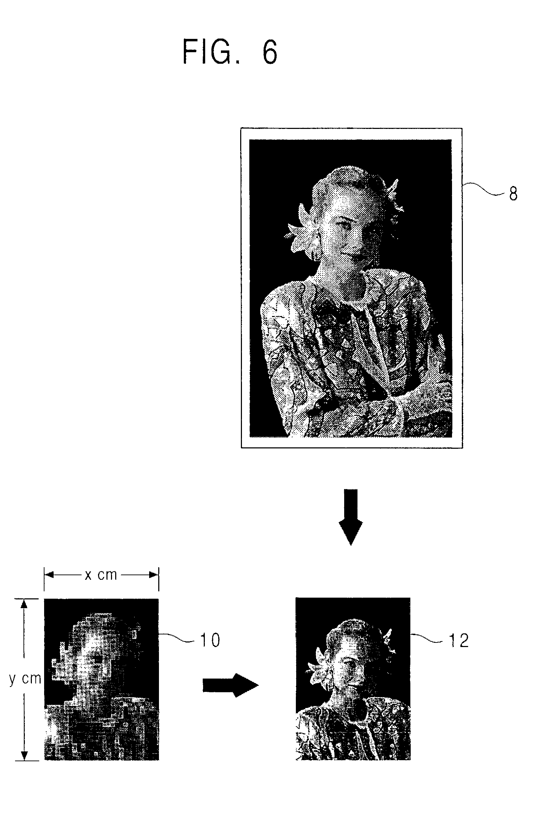

Fig. 6 is a view showing a condition in which a printing image is read from the original image according to the reading position and size of the preview image and a printing size in the present embodiment.

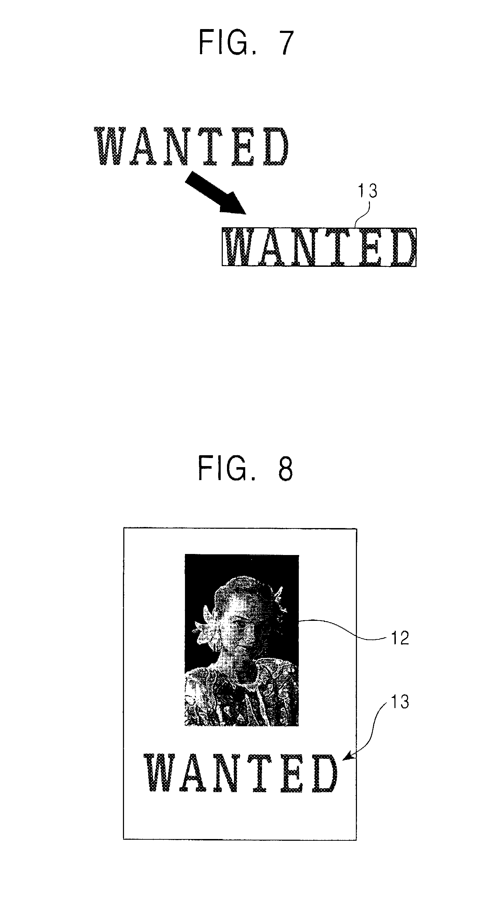

Fig. 7 is a view showing a condition in which the bitmap image of characters for printing is generated according to the outline information of the laid-out characters in the present embodiment.

Fig. 8 is view showing a condition in which the bitmap images of the image and the characters are combined in the present embodiment.

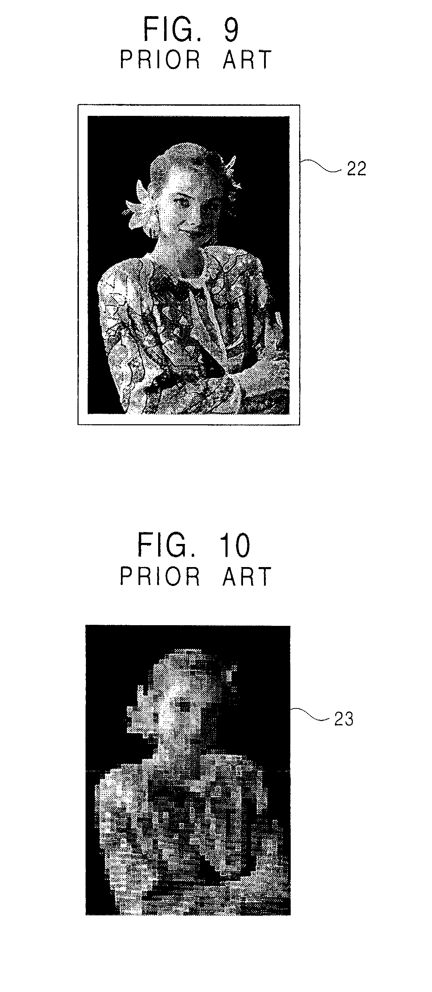

Fig. 9 is a view of the original image read by an image scanner in an operation of a conventional program storage medium.

Fig. 10 is a view of a preview image read in an operation of the conventional program storage medium.

Fig. 11 is a view of an image used for image layout and printing, read in an operation of the conventional program storage medium.

Fig. 12 is a view showing a layout image laid out on a document together with characters in an operation of the conventional program storage medium.

Fig. 13 is a view showing a condition in which re-size processing such as interpolation and thinning out is applied to a bitmap-data image according to a printing size in an operation of the conventional program storage medium.

Fig. 14 is a view showing a condition in which a bitmap image of characters used for printing is generated according to the outline information of the laid-out characters in an operation of the conventional program storage medium.

Fig. 15 is a view showing a condition in which the bitmap images of the image and the characters are combined in an operation of the conventional program storage medium.

### DESCRIPTION OF THE PREFERRED EMBODIMENT

An embodiment of the present invention will be described below by referring to Fig. 1 to Fig. 8.

A program storage medium 1 according to the present embodiment of the present invention is a floppy disk, a hard disk, or others which stores a program for controlling a personal computer 3, image reading means 4, and a printing unit 6 to edit and print the desired character, figure, and image. The program storage medium 1 is generally connected to a control section 3a of the personal computer 3 and the program is executed.

A hardware system 2 having the program storage medium 1 of the present embodiment includes a personal computer 3 provided with a control section 3a for controlling each unit according to the program of the program storage medium 1, a storage section 3b for storing information related to operation targets such as the desired image information, and an input and output interface 3c for connecting to an external unit, such as an IDE or SCSI interface. The personal computer 3 is connected to a file system such as a CD-ROM drive 4a and to an image scanner 4b serving as the image reading means 4, through the input and output interface 3c, and is also connected to a keyboard 5a serving as input means for inputting character information and character-modification information and to a mouse 5b serving as means for inputting the coordinate information and modification information of a figure.

The personal computer 3 is further connected to a display unit 7 for displaying a read image, an input character, and an input figure on a screen.

The personal computer 3 is also connected through the input and output interface 3c to a printer 6 serving as a printing unit for printing a predetermined document after the image, character, and figure are arranged and edited, namely, laid out, on the document.

The program stored in the program storage medium 1 of the present embodiment built-in the hardware system 2 uses a bitmap-data image read at a low resolution by the image scanner 4b when operation targets, such as the image, a character, and a figure, are laid out on a document; specifies, when printing, the reading resolution most appropriate for printing according to a printing size and the information of an original image 8, such as the position and the size thereof, obtained when the low-resolution bitmap-data image is read; reads the image by the image scanner 4b again at this reading resolution; and prints the document by the printer 6.

According to the program, a different operation is actually performed depending on whether the bitmap-data image is stored in the file system or is read by the image scanner 4b or other units.

When the bitmap-data image is read from the file system such as the CD-ROM drive 4a, the bitmap-data image is resampled when read to form a low-resolution bitmap-data image and it is used for layout and editing. When printing, the original bitmap-data-image information is read and used.

On the other hand, when the bitmap-data image is read by the image scanner 4b, since the whole of the original needs to be read for trimming in which a reading area is determined, as a low-resolution preview image 9, the information of the preview image 9 is used not only for trimming but also for layout. When printing, the image is read at a reading resolution appropriate for the printing size by the image scanner 4b and printing is performed.

Especially when an image is read by the image scanner 4b or a digital camera, even if the printing size is changed, the image can be read again at the most appropriate resolution. Therefore, the image quality is prevented from deteriorating when the printing size is changed, and a printing-operation speed is prevented from lowering when bitmap-data-image information having a higher resolution than required is used for printing.

As an operation in the present embodiment, a case in which a bitmap-data image is read by the image scanner 4b and used will be described below by referring to Fig. 2 to Fig. 8.

The original image 8 is placed on the image scanner 4b as shown in Fig. 2 and the preview image 9 is read at a low resolution for trimming. Since this preview image 9 is used to determine a reading area, the low-resolution image is used as shown in Fig. 3.

Then, the preview image 9 is cut at an appropriate size to generate a layout image 10 as shown in Fig. 4 in order to perform layout work on a document. Since this layout image 10 is generated from the preview image 9, which is read at a low resolution, the layout image 10 may be displayed in a mosaic manner on the screen of the display unit 7. In this case, however, it causes no problem when the image is laid out on the document.

As shown in Fig. 5, the layout image 10, which is cut from the preview image 9, is disposed on the document, is displayed on the screen of the display unit, and edited in the desired manner with a balance with a character and a figure taken into account. Information related to the character, figure, and bitmap-data image edited in this way is stored in the storage section 3b.

When printing, the control section 3a of the personal computer 3 generates the bitmap images pf a printing image 12 and printing characters 13 according to the information of the laid-out image, character, and figure, stored in the storage section 3b.

Specifically, as shown in Fig. 6, the reading resolution most appropriate for printing of a bitmap-data image to be read by the image scanner 4b is calculated according to the reading position information and the size information of the preview image 9, which is read at the low resolution, and a printing size, and the original image 8 on the image scanner 4b is read again according to the reading resolution to generate the information of the printing image 12.

On the other hand, the bitmap image of a character and a figure having a resolution required for printing is generated according to the outline information of the laid-out character and figure, as shown in Fig. 7.

Then, the bitmap image of the character and the figure is combined with the bitmap-data image read by the image scanner 4b as shown in Fig. 8, and printed by the printer 6.

When the image is read from a file system such as a CD-ROM drive, not read by the image scanner 4b, a low-resolution bitmap-data image used for resampling is used, instead of the preview image 9, for the layout work on the document.

Therefore, according to the present embodiment, since a low-resolution image is used for layout on a document and thereby the amount of image information is greatly reduced, the layout work is quickly and smoothly performed and the file size of the document is reduced.

In printing, since the most appropriate reading resolution is calculated from the reading position and the size information of the preview image 9 and the printing size information, and the image is printed at that resolution, the image quality is improved.

In addition, since the image information read by the image reading means 4 and used for layout work differs from the image information used for printing, a reading operation by the image reading means 4 and a printing operation can be performed simultaneously. A buffer size required for storing the image information used for printing, read by the image reading means 4, can be reduced.

Furthermore, since an image read for a preview can be used for layout work on a document as is, the number of times a low-resolution image is read is reduced and the layout work is performed efficiently and promptly.

The present invention is not limited to the above embodiment. It can be applied to various embodiments modified as required.

In the above embodiment, the reading resolution of the bitmap-data image for printing is calculated according to the position and size of the laid-out preview image 9 and the printing size information. The source information is not limited to those described above. The reading resolution may be calculated according to one of the above information items or according to the above information items plus another information item.

## Claims

1. A program storage medium for storing a program used for laying out operation targets such as an image, a character, and a figure on a document and for printing the document, wherein the program uses a low-resolution image read by image reading means when the operation targets are laid out on the document; and specifies the reading resolution most appropriate for printing according to original-image information obtained when the low-resolution image is read and printing-size information when printing, and reads the image again by the image reading means at the specified reading resolution and prints it.

2. A program storage medium according to Claim 1, wherein a preview image for specifying a reading area to be read by the image reading means serves as the low-resolution image.

3. A computer program used for laying out operation targets such as an image, a character, and a figure on a document and for printing the document, wherein the program uses a low-resolution image read by image reading means when the operation targets are laid out on the document; and specifies the reading resolution most appropriate for printing according to original-image information obtained when the low-resolution image is read and printing-size information when printing, and reads the image again by the image reading means at the specified reading resolution and prints it.

4. A method for laying out operation targets such as an image, a character, and a figure on a document and for printing the document, comprising using a low-resolution image read by image reading means when the operation targets are laid out on the document; and specifying the reading resolution most appropriate for printing according to original-image information obtained when the low-resolution image is read and printing-size information when printing, and reading the image again by the image reading means at the specified reading resolution and printing it.
